# EUROPÄISCHE PATENTSCHRIFT

(11) **EP 0 670 232 B1**
(45) Veröffentlichungstag und Bekanntmachung des Hinweises auf die Patenterteilung: **11.06.1997**
(21) Anmeldenummer: 95102060.1
(22) Anmeldetag: 24.02.1995
(51) Int. Cl.: B60J 7/047

(54) **Fahrzeugdach mit einer Folge von Lamellen**
Vehicle roof with a sequence de lamellae
Toit de véhicule avec une séquence de lamelles

(30) Priorität: 04.03.1994 DE 4407286
(43) Veröffentlichungstag der Anmeldung: 06.09.1995
(73) Patentinhaber: WEBASTO KAROSSERIESYSTEME GmbH, D-82131 Stockdorf (DE)
(72) Erfinder: Salz, Wolfram, D-82131 Stockdorf (DE); Reinsch, Burkhard, D-82061 Neuried (DE)
(74) Vertreter: Wiese, Gerhard

(56) Entgegenhaltungen:
- EP-A- 0 218 020
- EP-A- 0 309 775
- EP-A- 0 584 496
- DE-A- 4 123 229

## Beschreibung

Die Erfindung bezieht sich auf ein Fahrzeugdach mit einer Folge von Lamellen zum wahlweisen Verschließen oder mindestens teilweisen Freigeben einer Dachöffnung in einer festen Dachfläche, wobei die Lamellen in der Schließstellung aneinander angrenzen und einen flächigen Lamellenverbund bilden, wobei jede Lamelle an ihren Schmalseiten an zwei in Verschieberichtung in Abstand voneinander liegenden Führungsstellen entlang von dachfesten Führungen, mit denen beide Führungsstellen im gesamten Verstellbereich der Lamellen in Eingriff gehalten sind, derart geführt ist, daß beim Verstellen der Lamellen der flächige Lamellenverbund durch Verschwenken jeweils einer einzelnen Lamelle am einen Verbundende Lamelle für Lamelle beim Öffnen des Daches aufgelöst bzw. beim Schließen des Daches wiederhergestellt wird.

Bei einem bekannten Fahrzeugdach dieser Art (DE 41 23 229 A1) sind die Lamellen jeweils an einer ihrer Führungsstellen an einem entlang von Längsführungen verstellbaren Gleitstück um einen Lagerbolzen drehbar gelagert. An ihrer anderen Führungsstelle wirken die Lamellen jeweils mit einer Führungsbahn zusammen, welche die zum lamellenweisen Auflösen und Wiederherstellen des flächigen Lamellenverbundes erforderliche Schwenkbewegung der einzelnen Lamellen in Abhängigkeit von der Verschiebebewegung der Lamellen erzwingt. Zum Verstellen der Lamellen ist ein gemeinsamer Antrieb vorgesehen. Das Gleitstück jeder Lamelle kann über eine Riegelsteinkupplung an den gemeinsamen Antrieb angekuppelt bzw. von diesem abgekuppelt werden.

Der Erfindung liegt die Aufgabe zugrunde, ein solches bekanntes Fahrzeugdach derart weiterzubilden, daß die Verstellmechanik als Ganzes vereinfacht und besonders robust ist, mit einer relativ geringen Bauhöhe auskommt und gleichwohl für eine besonders stabile Abstützung der Lamellen sowohl im Schließzustand als auch im ausgestellten Zustand sorgt.

Bei einem Fahrzeugdach mit den Merkmalen des Oberbegriffs des Patentanspruchs 1 wird diese Aufgabe erfindungsgemäß dadurch gelöst, daß entlang einer gemeinsamen Führungsbahn verschiebbare Lagereinheiten vorgesehen sind, in denen zum Verstellen des flächigen Lamellenverbundes jeweils sowohl die hintere Führungsstelle einer der Lamellen als auch die vordere Führungsstelle der im Lamellenverbund nächstfolgenden Lamelle gelagert sind und die dadurch über die Lamellen selbst oder über die Lamellen abstützende Lamellenträger untereinander formschlüssig gekuppelt sind, und daß diese Lagereinheiten mit einer in Abhängigkeit von der Verstellbewegung des flächigen Lamellenverbundes gesteuerten Sperreinrichtung versehen sind, welche die hintere Führungsstelle der betreffenden Lamelle beim Öffnen des Daches für eine Ausstellbewegung freigibt bzw. beim Schließen des Daches wieder mit der zugehörigen Lagereinheit verriegelt, wenn die Lagereinheit im Zuge ihrer Verschiebebewegung eine vorbestimmte Lage mit Bezug auf die dachfeste Führung erreicht. Bei dem erfindungsgemäßen Fahrzeugdach werden die Antriebskräfte unmittelbar von Lamelle zu Lamelle durch Formschluß übertragen, was für hohe Robustheit sorgt. Die erfindungsgemäße Art der Lamellenführung erlaubt eine besonders stabile Abstützung der Lamellen in allen Betriebsstellungen.

In weiterer Ausgestaltung der Erfindung sind die Lagereinheiten jeweils mit einem Drehlager, in dem eine Lamelle mit ihrer vorderen Führungsstelle schwenkbar gelagert ist und das eine Aufnahme zum lösbaren Aufnahmen der hinteren Führungsstelle der im Lamellenverbund vorausgehenden Lamelle aufweist, sowie mit einem Sperrglied versehen, das gegenüber dem Drehlager verstellbar ist, um die betreffende hintere Führungsstelle in der Aufnahme zu verriegeln bzw. für eine Ausstellbewegung der Lamelle freizugeben. Um unerwünschte Verstellbewegungen mit Sicherheit auszuschließen, sind vorzugsweise die Lagereinheiten mit einer Verriegelungsvorrichtung ausgestattet, welche das Drehlager und das Sperrglied sowohl bei geschlossenem Dach als auch beim Verschieben des flächigen Lamellenverbundes in einer gegenseitigen Sperrstellung verriegelt, in welcher die hintere Führungsstelle festgehalten wird.Für eine sichere Fixierung der ausgestellten Lamellen kann in weiterer Ausgestaltung der Erfindung dadurch gesorgt werden, daß die Lagereinheiten jeweils mit einer Verriegelungsvorrichtung versehen sind, welche das Drehlager mit Bezug auf ein dachfestes Teil verriegelt, wenn die Lagereinheit eine Stellung erreicht, in welcher diejenige Lamelle, deren vordere Führungsstelle in der Lagereinheit gelagert ist, vollständig ausgestellt ist.

Beide vorstehend genannten Verriegelungseinrichtungen können von einer zweckmäßig als Riegelsteinkupplung ausgebildeten gemeinsamen Umschaltkupplung gebildet sein, welche in Abhängigkeit von der Stellung der betreffenden Lagereinheit mit Bezug auf die dachfeste Führung das Drehlager entweder mit Bezug auf das Sperrglied oder auf das dachfeste Teil fixiert. Dadurch läßt sich eine besonders hohe Betriebssicherheit mit vergleichsweise wenigen Bauteilen erreichen. Zweckmäßig ist den Lamellen zum Führen der für die Ausstellbewegung freigegebenen hinteren Führungsstelle jeweils eine Ausstellbahn zugeordnet, wobei die Ausstellbahn für die hinterste Lamelle Teil einer schwenkbaren Ausstellführung ist, mittels deren die Hinterkante der hintersten Lamelle beim Öffnen des Daches vor dem Verschieben des flächigen Lamellenverbundes über den hinteren Rand der Dachöffnung anhebbar ist, während die Ausstellbahnen der übrigen Lamellen dachfest ausgebildet sind.

Die vordere Führungsstelle der vordersten Lamelle ist vorteilhaft in einem entlang der dachfesten Führung verstellbaren Drehlager gelagert, das mit einer Antriebseinheit in ständiger oder lösbarer Verbindung steht. Eine ständige Antriebsverbindung eignet sich für Fälle, in denen die schwenkbare Ausstellführung der letzten Lamelle mittels eines gesonderten Antriebs verstellt wird. Ist dagegen nur ein einziger Antrieb vorhanden, ist vorteilhaft das der vordersten Lamelle zugeordnete Drehlager mit einem entlang der dachfesten Führung verstellbaren Kupplungsstück kuppelbar, das seinerseits mit der Antriebseinheit in ständiger Verbindung steht und das zweckmäßig in Abhängigkeit von seiner Lage mit Bezug auf die dachfeste Führung selbsttätig mit dem Drehlager der vordersten Lamelle oder einer Stelleinrichtung für die schwenkbare Ausstellführung und/oder einer Stelleinrichtung für einen Windabweiser kuppelbar ist.

Die Erfindung ist nachstehend anhand eines bevorzugten Ausführungsbeispiels unter Bezugnahme auf die beiliegenden Zeichnungen näher erläutert. Es zeigen:
- Fig. 1: eine perspektivische schematische Ansicht eines Lamellendaches in teilweise geöffnetem Zustand,
- Fig. 2: eine Ansicht entsprechend Fig. 1 bei voll geöffnetem Dach,
- Fign. 3a und 3b: nebeneinandergelegt einen Längsschnitt durch das Dach im geschlossenen Zustand,
- Fign. 4a und 4b: nebeneinandergelegt einen Längsschnitt durch das Dach bei ausgestelltem Windabweiser und angehobener hinterster Lamelle,
- Fign. 5a und 5b: nebeneinandergelegt einen Schnitt durch das Dach im voll geöffneten Zustand,
- Fign. 6a und 6b: nebeneinandergelegt eine Teildraufsicht auf das Fahrzeugdach im geschlossenen Zustand,

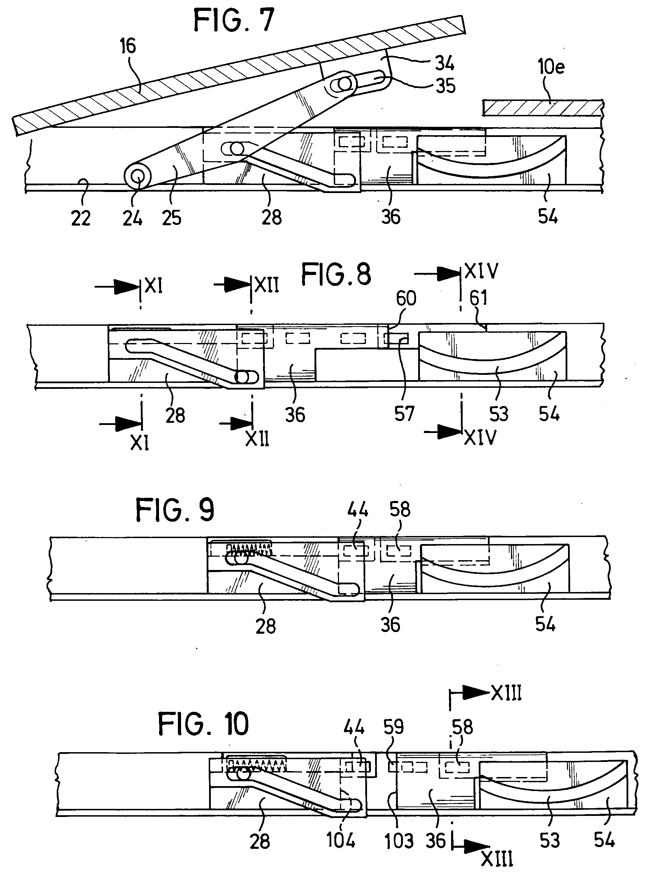

- Fign. 7 bis 10: in größerem Maßstab Seitenansichten der Windabweiserkulisse, des Kupplungsstücks und des vordersten Drehlagers in unterschiedlichen Arbeitsstellungen, wobei in Fig. 7 zusätzlich der Windabweiser und die vorderste Schiebelamelle angedeutet sind,

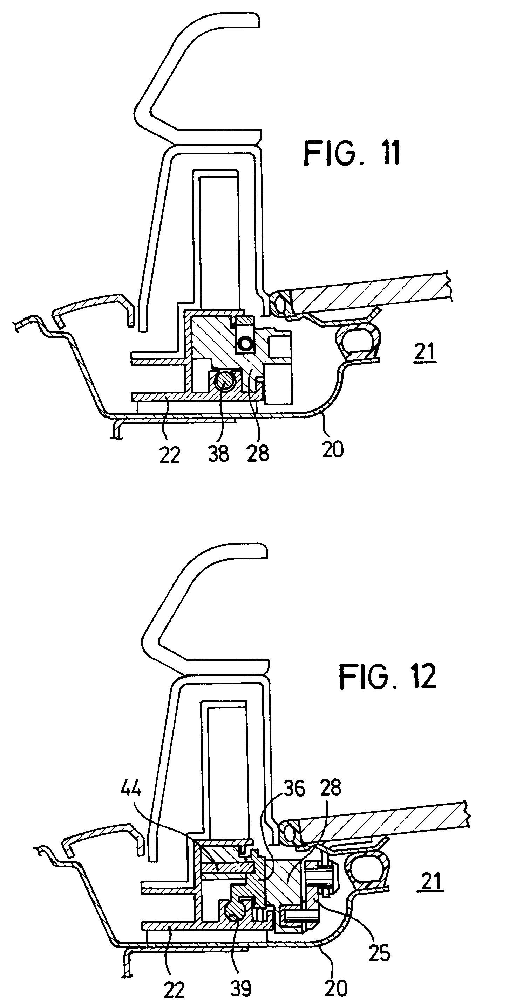

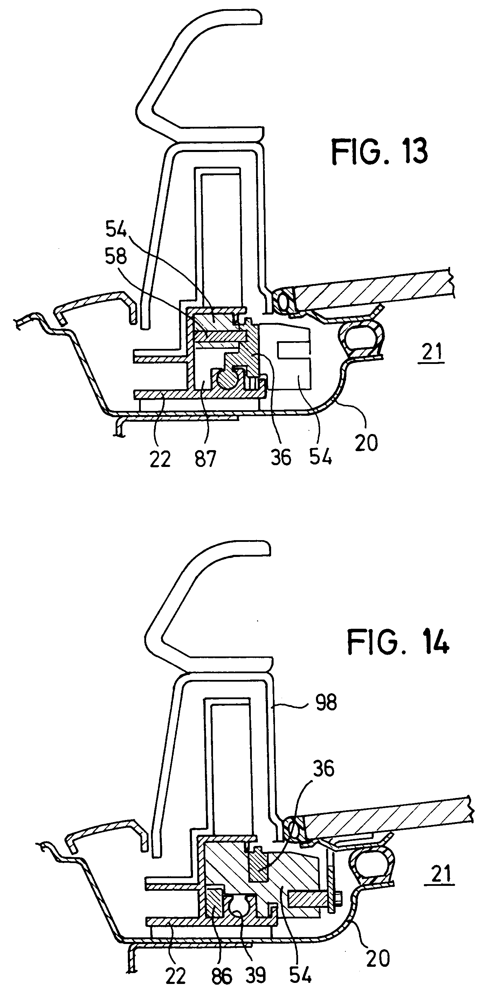

- Fign. 11 bis 14: Schnitte entlang den Linien XI-XI, XII-XII und XIV-XIV in Fig. 8 bzw. bzw. XIII-XIII in Fig. 10,
- Fig. 15: eine perspektivische Teilansicht des Fahrzeugdachs im Bereich des Windabweisers,
- Fig. 16: eine perspektivische Ansicht der Windabweiserkulisse,
- Fig. 17: eine perspektivische Ansicht des Kupplungsstücks,
- Fig. 18: einen Schnitt entlang der Linie XVIII-XVIII der Fig. 17,

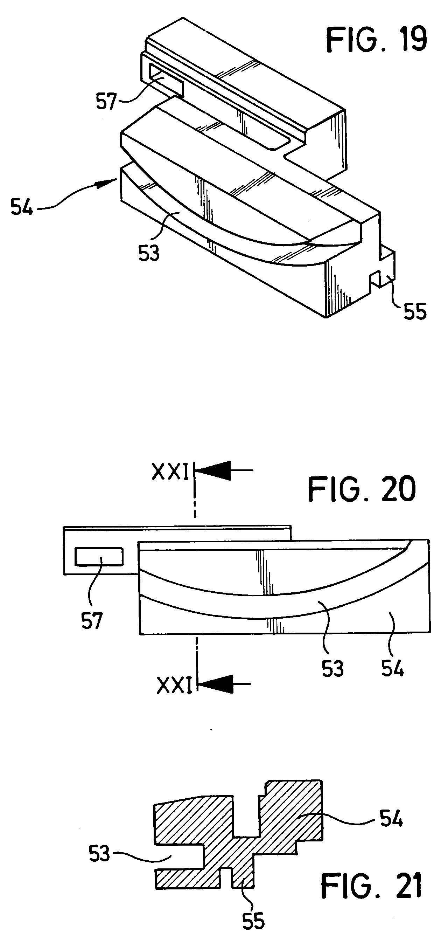

- Fig. 19: eine perspektivische Ansicht des vordersten Drehlagers,
- Fig. 20: eine Seitenansicht des vordersten Drehlagers,
- Fig. 21: einen Schnitt entlang der Linie XXI-XXI der Fig. 20,

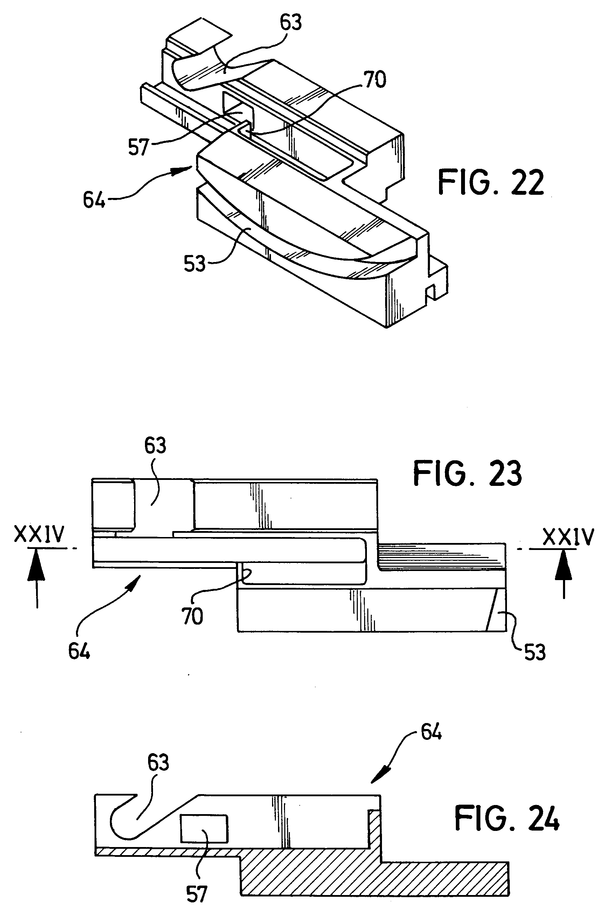

- Fig. 22: eine perspektivische Ansicht eines Drehlagers für die übrigen Lamellen,
- Fig. 23: eine Draufsicht auf das Drehlager gemäß Fig. 22,
- Fig. 24: einen Schnitt durch das Drehlager entlang der Linie XXIV-XXIV der Fig. 23,

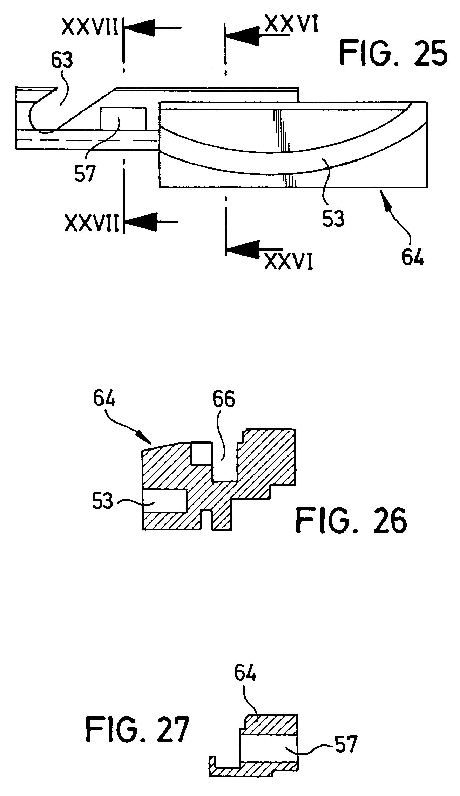

- Fig. 25: eine Seitenansicht des Drehlagers nach den Fign. 22 bis 24,
- Fign. 26 und 27: Schnitte durch das Drehlager entsprechend den Linien XXVI-XXVI und XXVII-XXVII in Fig. 25,

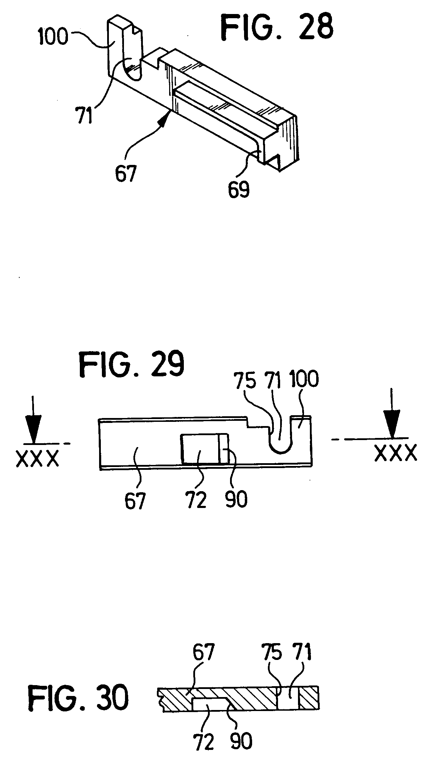

- Fig. 28: eine perspektivische Ansicht des Sperrschiebers,
- Fig. 29: eine Seitenansicht des Sperrschiebers,
- Fig. 30: einen Teilschnitt des Sperrschiebers entlang der Linie XXX-XXX der Fig. 29,
- Fign. 31 bis 37: Ansichten der Riegelsteine der Lagereinheiten,
- Fig. 38: eine perspektivische Ansicht einer der Lagereinheiten,
- Fig. 39: eine Seitenansicht der Lagereinheit nach Fig. 38,
- Fig. 40: einen Schnitt entlang der Linie - der Fig. 39,
- Fig. 41: eine Seitenansicht einer Lamelle mit zugehörigem Lamellenträger,
- Fig. 42: eine Draufsicht auf den Lamellenträger gemäß Fig. 41,
- Fig. 43: eine Seitenansicht der Ausstellbahnen, sowie

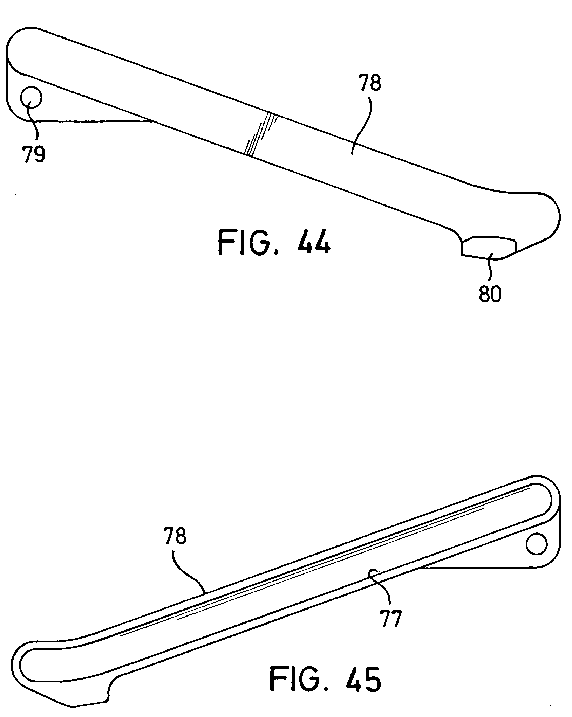

- Fign. 44 und 45: Seitenansichten der schwenkbaren Ausstellführung.

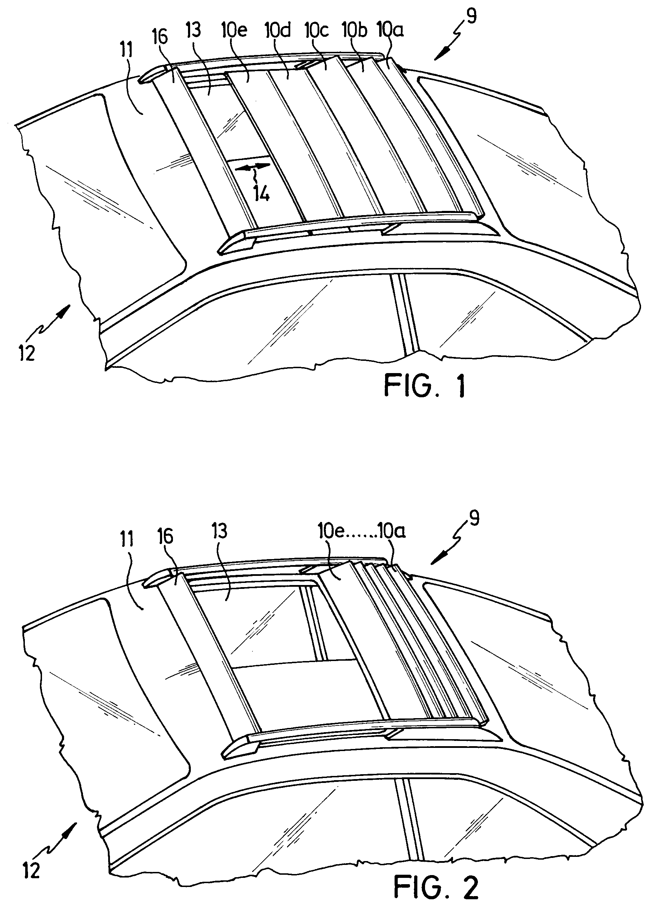

Das vorliegend erläuterte, als Lamellendach zu bezeichnende Fahrzeugdach 9 weist, wie aus den Prinzipdarstellungen der Fign. 1 und 2 hervorgeht, eine Folge von Schiebelamellen 10a bis 10e auf. Diese Lamellen dienen dem wahlweisen Verschließen oder mindestens teilweisen Freigeben einer Dachöffnung 13, die in einer festen Dachfläche 11 eines Kraftfahrzeuges 12 ausgebildet ist. Zum Öffnen und Verschließen des Daches 9 lassen sich die Lamellen 10a bis 10e verschieben, wobei im gezeigten Ausführungsbeispiel die mit dem Doppelpfeil 14 angedeutete Verschieberichtung parallel zur Fahrzeuglängsachse verläuft. Grundsätzlich sind aber auch andere Verschieberichtungen, z.B. quer zur Fahrzeuglängsachse, möglich.

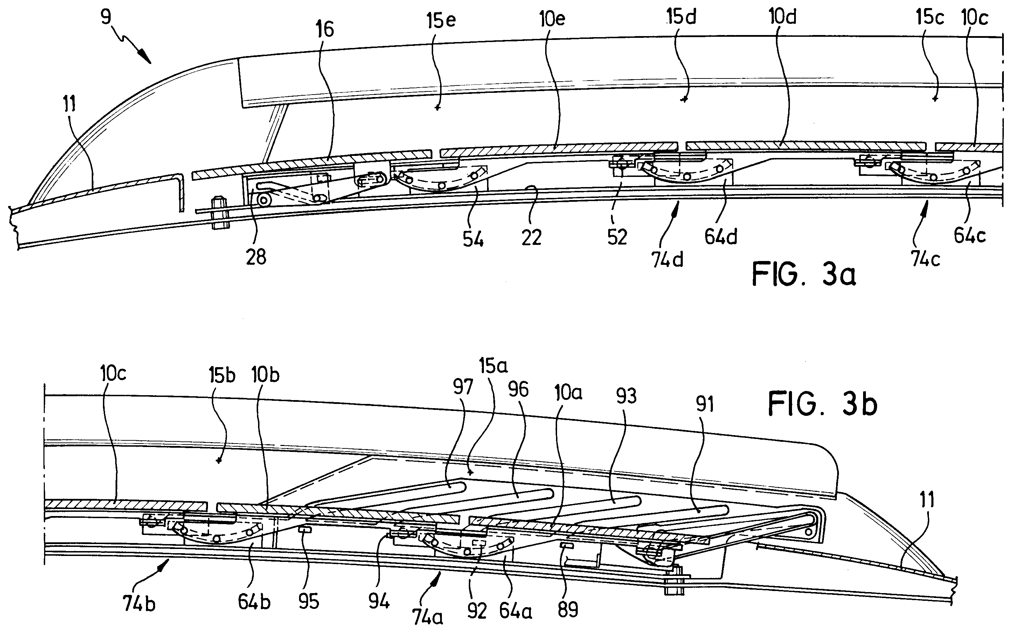

In ihrer Schließstellung stoßen die Lamellen 10a bis 10e dichtend aneinander an. Dabei bilden sie einen flächigen Lamellenverbund, wie dies in Fig. 1 für die beiden Lamellen 10d und 10e angedeutet ist. Die Lamellen 10a bis 10e sind ferner jeweils um eine sich quer zur Verschieberichtung 14 erstreckende Schwenkachse verschwenkbar. Diese Schwenkachsen sind in den Fign. 3a und 3b bei 15a bis 15e angedeutet.Eine nachstehend näher erläuterte Verstellmechanik koordiniert die Verschiebe-und Schwenkbewegungen der einzelnen Lamellen 10a bis 10e derart, daß beim Verstellen der Schiebelamellen der flächige Lamellenverbund eine Translationsbewegung in der Verschieberichtung 14 ausführt und dieser Verbund beim Öffnen des Daches 9 im Bereich des in Öffnungsrichtung vorne liegenden Endes durch Herausbewegen der jeweils in Öffnungsrichtung vordersten Lamelle aus dem Verbund Lamelle für Lamelle aufgelöst bzw. beim Schließen des Daches wiederhergestellt wird.

Im Verlauf des Öffnens des zuvor geschlossenen Daches 9 wird also zunächst nur die Lamelle 10a aus dem flächigen Lamellenverbund gelöst, indem diese Lamelle so verschwenkt wird, daß sie mit ihrem hinteren Rand vom hinteren Rand der Dachöffnung 13 freikommt. Die Lamelle 10a kann dann beginnend in dieser Schräglage zusammen mit den übrigen, im flächigen Lamellenverbund verbleibenden, d.h. nicht ausgeschwenkten, Lamellen 10b und 10e nach hinten verschoben werden. Dabei wird die Lamelle 10a kontinuierlich in ihre Endlage weiter verschwenkt. Nachdem die Lamelle 10a ihre in den Fign. 1 und 2 veranschaulichte hintere Endstellung erreicht hat, wird die nächste Lamelle 10b ausgestellt. Dieses Spiel wiederholt sich, bis entsprechend Fig. 2 alle Schiebelamellen 10a bis 10e ausgestellt und nach hinten in ihre Offenstellung geschoben sind.

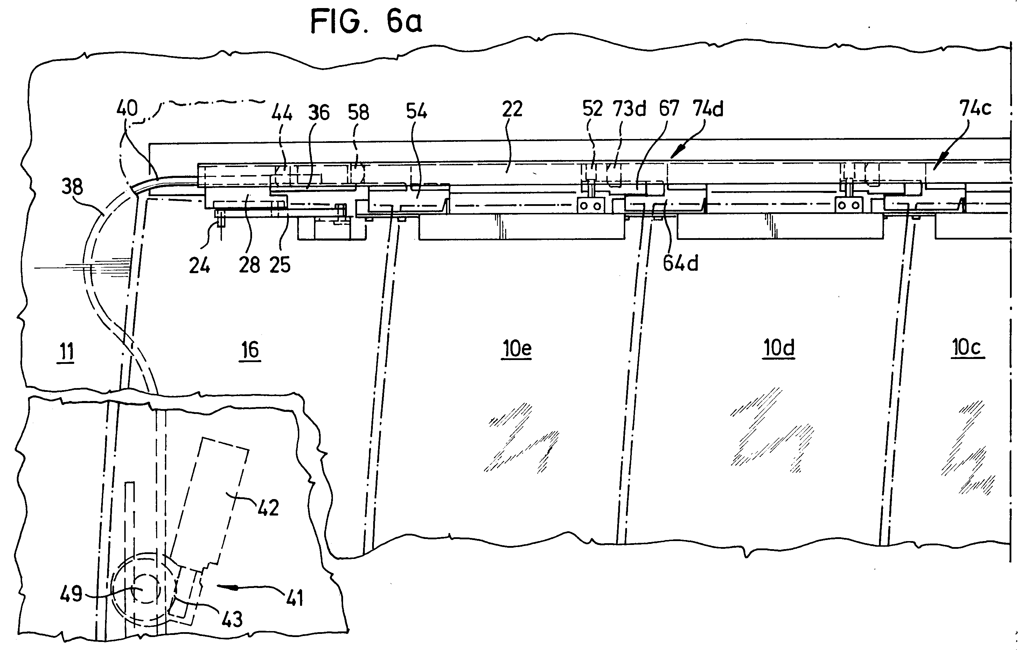

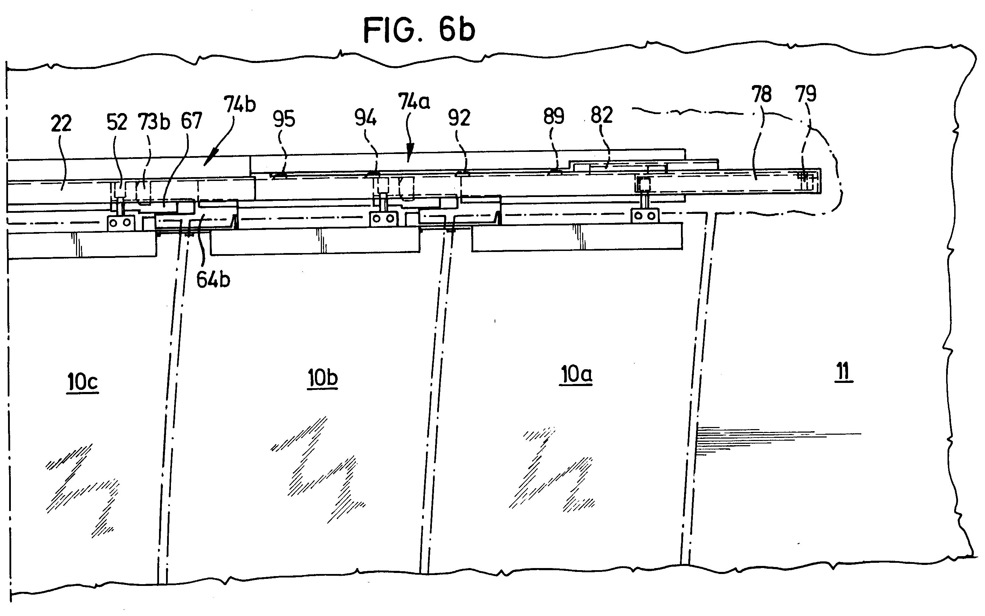

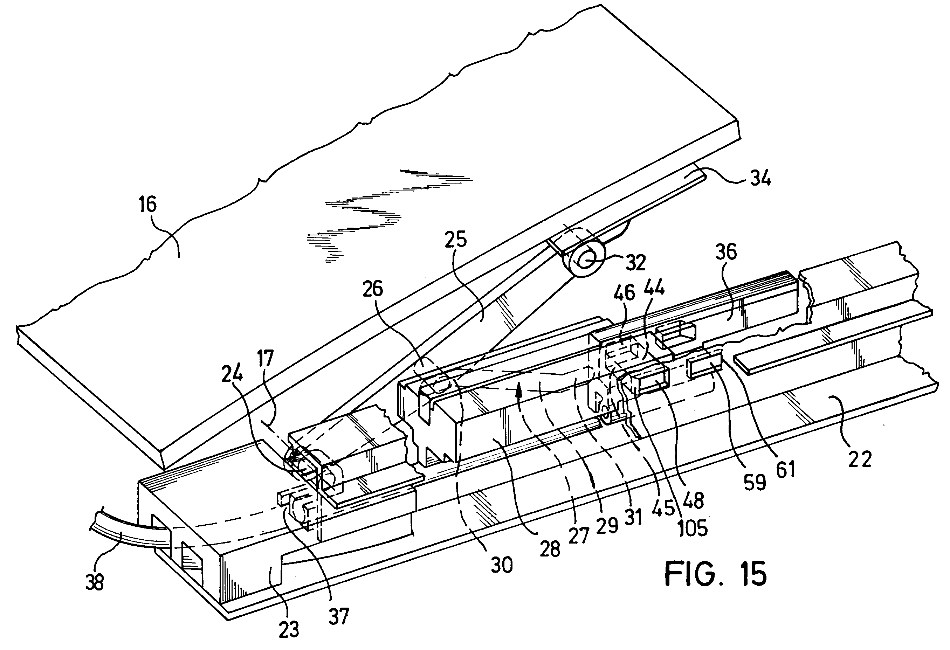

Beim Schließen des Daches wird ausgehend von der Offenstellung gemäß Fig. 2 zunächst nur die Lamelle 10e vorbewegt und in eine zur festen Dachfläche 11 parallele Lage zurückverschwenkt. Ein entsprechender Bewegungsablauf wird nacheinander für die folgenden Lamellen 10d bis 10a erzwungen, bis die Lamellen im flächigen Verbund in ihrer vorderen Endstellung stehen und die Dachöffnung 13 verschließen. Im Falle der veranschaulichten Ausführungsform sitzt im Bereich des vorderen Endes der Dachöffnung 13 ein einstellbarer, lamellenförmiger Windabweiser 16, der beim Einleiten des Öffnungsvorganges um eine quer zur Fahrzeuglängsachse verlaufende Schwenkachse 33 (Fig. 15) in eine schräg nach hinten ansteigende Lage verschwenkt wird. Dabei nimmt das Dach eine Lüftungsstellung ein, die bei in Schließstellung befindlichen Lamellen auch bei Regen benutzt werden kann. Der Windabweiser 16 legt sich in seiner Schließstellung (Fig. 6a) gegen die ihm benachbarte Lamelle 10e dichtend an. Er verschließt dabei den vordersten Teil der Dachöffnung 13.

Gegebenenfalls kann die Auslegung aber auch so getroffen sein, daß der flächige Verbund der Lamellen 10a bis 10e in der Schließstellung von der Vorderkante bis zur Hinterkante der Dachöffnung 13 reicht und damit allein die Schließfunktion übernimmt. Dabei kann gegebenenfalls in für Schiebedächer an sich bekannter Weise (DE-A 23 25 594, DE-A 34 26 998 und DE-C 39 16 906) ein Windabweiser vorgesehen sein, der bei geschlossenem Dach unter der festen Dachfläche verschwindet und der selbsttätig in eine Arbeitsstellung übergeht, wenn das Dach geöffnet wird.

In den Fign. 1 und 2 ist ein Fahrzeugdach mit fünf Schiebelamellen 10a bis 10e dargestellt. Es versteht sich jedoch, daß die Anzahl der Schiebelamellen grundsätzlich beliebig in Abhängigkeit von den jeweiligen Gegebenheiten gewählt werden kann.

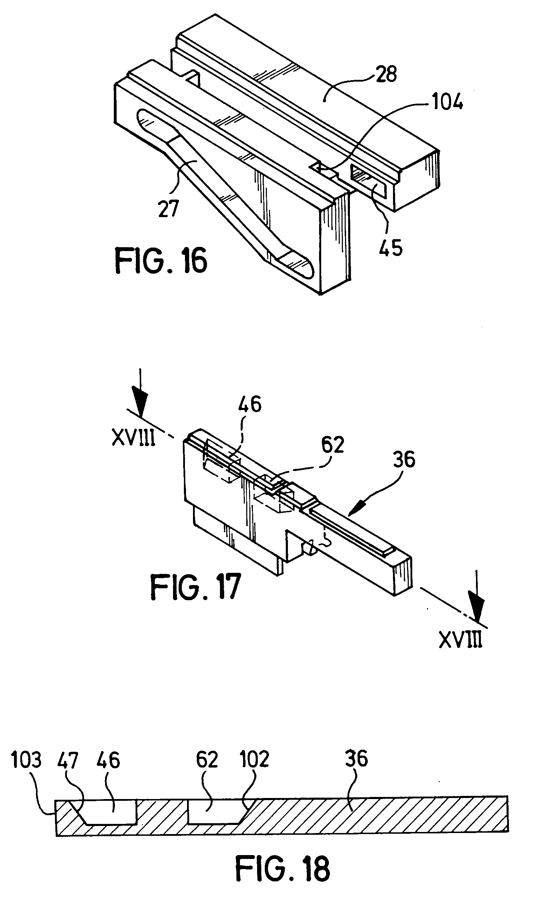

Das Fahrzeugdach 9 weist einen unterhalb der festen Dachfläche 11 sitzenden Dachrahmen 20 auf, der eine Rahmenöffnung 21 begrenzt. Der Dachrahmen 20 trägt an beiden Seiten jeweils eine in der Verschieberichtung 14 verlaufende Führungsschiene 22. Die Ausbildung ist zu beiden Seiten des Daches 9 im wesentlichen spiegelsymmetrisch zu einer Längsmittellinie, so daß die Darstellungen und Erläuterungen für die eine Dachseite sinngemäß auch für die andere Dachseite gelten.Am vorderen Ende jeder der Führungsschienen 22 sitzt ein Lagerbock 23 (Fig. 15), der einen Lagerbolzen 24 aufnimmt. Über den Lagerbolzen 24 ist das vordere Ende eines Ausstellhebels 25 mit dem Lagerbock 23 schwenkbar verbunden. Die Lagerböcke 23 auf beiden Dachseiten bestimmen eine dachfeste Schwenkachse 17 der Ausstellhebel 25. Von einer gegenüber dem Lagerbolzen 24 nach hinten versetzten Stelle des Ausstellhebels 25 steht ein Kulissenstift 26 seitlich nach außen vor. Der Kulissenstift 26 greift in eine Kulissenbahn 27 (vergleiche insbesondere Fign. 15 und 16) ein, die an der der Dachöffnung 13 zugewendeten Seite einer Windabweiserkulisse 28 ausgebildet ist und die einen sich schräg nach vorne und oben erstreckenden Hauptabschnitt 29 sowie einen vorderen und einen hinteren, parallel zur Verschieberichtung 14 verlaufenden Endabschnitt 30 bzw. 31 aufweist.

Das hintere Ende des Ausstellhebels 25 ist über einen Schwenkbolzen 32 an ein Lager 34 nahe dem hinteren Ende des Windabweisers 16 angelenkt. Dabei ist der Schwenkbolzen 32 in einem Schlitz 35 des Lagers 34 parallel zu dem Windabweiser 16 verstellbar geführt. Diese Anordnung bildet die (virtuelle) Schwenkachse 33, die zweckmäßig in Höhe der festen Dachfläche 11 oder darüber liegen kann, um beim Ausstellen des Windabweisers 16 ein unerwünschtes Eintauchen der Windabweiser-Vorderkante in die Dachöffnung 13 zu vermeiden.

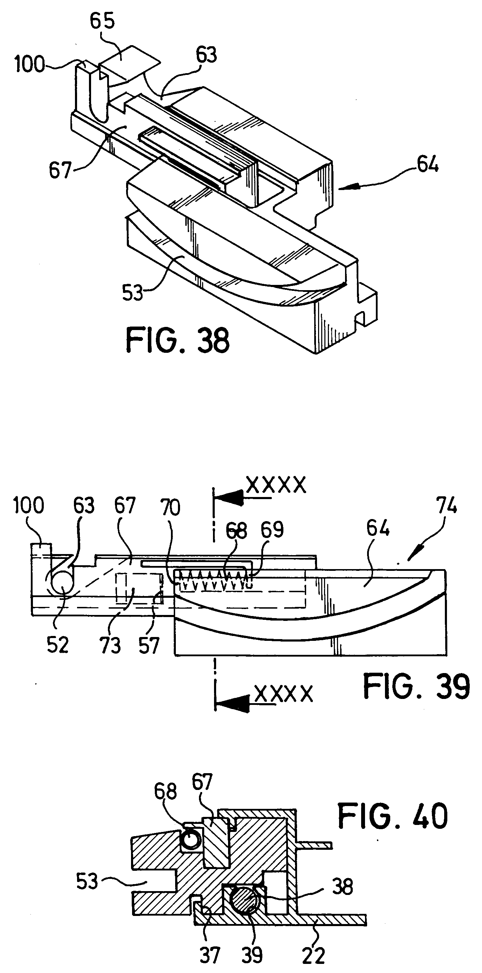

Die dem Verschwenken des Windabweisers 16 dienende Windabweiserkulisse 28 ist um eine begrenzte Strecke entlang der Führungsschiene 22 längsverschiebbar geführt. Zum Verstellen der Windabweiserkulisse 28 wird diese Kulisse über eine Kupplung, beispielsweise entsprechend der veranschaulichten Ausführungsform eine Riegelsteinkupplung, mit einem Kupplungsstück 36 auf Mitnahme verbunden. Das Kupplungsstück 36 ist seinerseits entlang einer Führungsbahn 37 der Führungsschiene 22 verschiebbar geführt, und es steht mit einem drucksteifen Antriebskabel 38 in fester Verbindung. Das vorzugsweise als Gewindekabel ausgebildete Antriebskabel 38 erstreckt sich durch einen Kabelführungskanal 39 der Führungsschiene 22 (Fig. 40) und ein daran im vorderen Bereich des Dachrahmens 20 anschließendes Führungsrohr 40 zu einer Antriebseinheit 41. Letztere weist im veranschaulichten Ausführungsbeispiel einen Elektromotor 42 und ein Untersetzungsgetriebe 43 auf. Ein mit dem Ausgang des Untersetzungsgetriebes 43 verbundens Ritzel 49 steht mit dem Antriebskabel 38 und einem entsprechenden Antriebskabel für die andere Dachseite in Eingriff.

Die Riegelsteinkupplung zur wahlweisen Herstellung einer Antriebsverbindung zwischen der Antriebseinheit 41 und dem Windabweiser 16 weist einen Riegelstein 44 auf, der in einer durchgehenden Öffnung 45 der Windabweiserkulisse 28 quer zur Führungsschiene 22 verstellbar gelagert ist und der in eine Riegelsteinaufnahme 46 des Kupplungsstücks 36 eingreift, wenn letzteres seine vordere Endstellung einnimmt. In dieser Stellung befindet sich der Kulissenstift 26 im hinteren Endabschnitt 31 der Kulissenbahn 27, wodurch der Windabweiser 16 gegen unbeabsichtigtes Anheben gesichert ist. Wird das Kupplungsstück 36 über das Antriebskabel 38 nach hinten verstellt, wird über den Riegelstein 44 die Windabweiserkulisse 28 nach hinten mitgenommen, bis letztere an einem dachfesten Anschlag anstößt. Der Kulissenstift 26 wird von dem Hauptabschnitt 29 der Kulissenbahn 27 nach oben gedrückt. Dadurch wird der Ausstellhebel 25 um die Schwenkachse 17 verschwenkt. Der Windabweiser 16 wird ausgestellt und in der ausgestellten Lage dadurch verriegelt, daß bei festgehaltener Windabweiserkulisse 28 durch fortgesetztes Verstellen des Kupplungsstücks 36 über eine Schrägfläche 47 der Riegelsteinaufnahme 46 (Fig. 18) auf den Riegelstein 44 eine quer zur Verschieberichtung 14 gerichtete Kraft ausgeübt wird, die den Riegelstein aus der Aufnahme 46 heraus- und in eine jetzt mit der Öffnung 45 fluchtende Riegelsteinaufnahme 48 der Führungsschiene 22 hineindrückt. Auf diese Weise wird die Antriebsverbindung zwischen dem Kupplungsstück 36 und der Windabweiserkulisse 28 gelöst, und die Windabweiserkulisse wird gegenüber der Führungsschiene 22 festgehalten. Dabei hat der Kulissenstift 26 den vorderen waagrechten Endabschnitt 30 der Kulissenbahn 27 erreicht, so daß auf den Windabweiser einwirkende Kräfte, z.B. Windkräfte, keine Kraftkomponente in der Verschieberichtung 14 auf die Windabweiserkulisse 28 übertragen können.

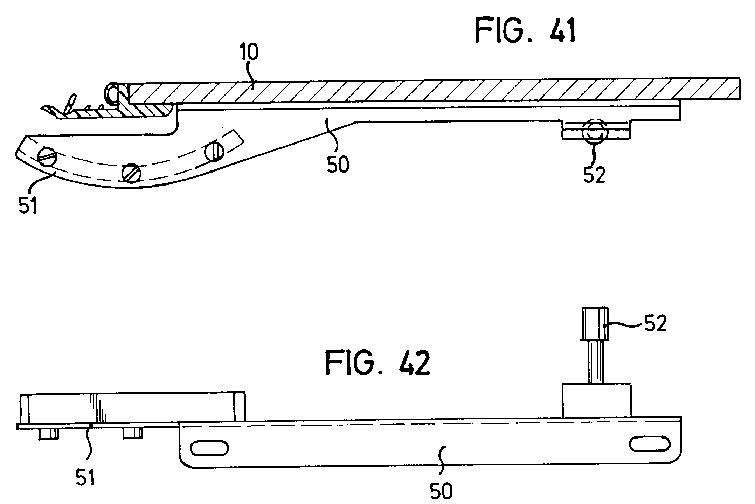

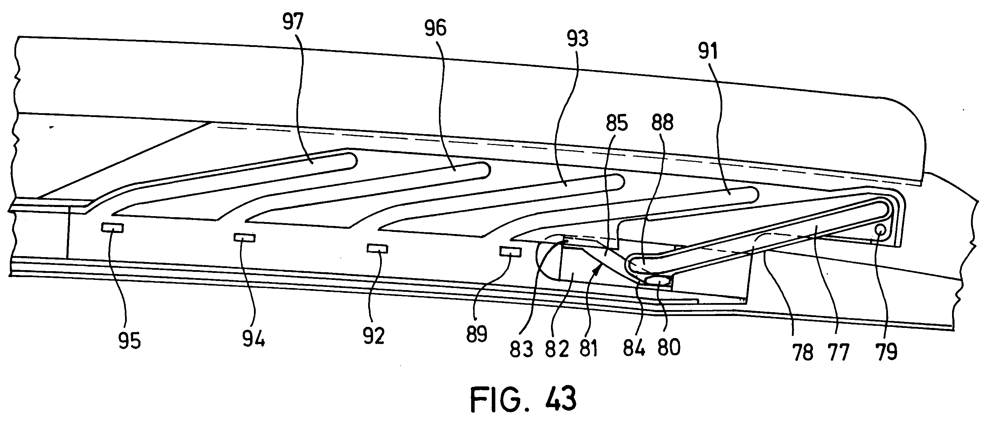

Die Schiebelamellen 10a bis 10e sind beidseits der Dachöffnung 13 jeweils auf einem Lamellenträger 50 (Fign. 41 bis 43) befestigt. An den Lamellenträgern 50 sind vorne ein Drehlagersegment 51 und hinten ein Führungsbolzen 52 angebracht. Das Drehlagersegment 51 und der Führungsbolzen 52 bilden für jede Schiebelamelle eine vordere und eine hintere Führungsstelle.Das Drehlagersegment 51 der in Vorwärtsfahrtrichtung des Fahrzeuges 12 vordersten Schiebelamelle 10e steht in ständigem Eingriff mit einer kreisbogenförmigen Führungsnut 53 eines vordersten Drehlagers 54, das entlang der Führungsschiene 22 verstellbar geführt ist und dabei mit einer Nase 55 in die Führungsbahn 37 der Führungsschiene 22 eingreift. Das Drehlagersegment 51 und die Führungsnut 53 bestimmen die Schwenkachse 15e der Schiebelamelle 10e.
Diese Schwenkachse liegt ebenso wie die Schwenkachsen 15a bis 15d der übrigen Schiebelamellen zweckmäßig in Höhe der festen Dachfläche 11 oder darüber, um beim Ausstellen der Schiebelamellen ein unerwünschtes Eintauchen der Lamellenvorderkanten in die Dachöffnung 13 zu vermeiden.

Das vorderste Drehlager 54 ist an das Kupplungsstück 36 zwecks Herstellung einer Antriebsverbindung mit der Antriebseinheit 41 ankuppelbar. Dafür kann grundsätzlich eine beliebige Schaltkupplung vorgesehen sein, die zweckmäßig in Abhängigkeit von der Stellung des Kupplungsstücks 36 mit Bezug auf die Führungsschiene 22 ein-und ausrückbar ist. Im veranschaulichten Ausführungsbeispiel handelt es sich dabei um eine Riegelsteinkupplung. Für diesen Zweck weist das vorderste Drehlager 54 eine durchgehende Queröffnung 57 auf, in der ein Riegelstein 58 verschiebbar gelagert ist.

In der Schließstellung des Lamellenverbundes greift der Riegelstein 58 in eine Riegelsteinaufnahme 59 der Führungsschiene 22 ein, und er verriegelt dadurch das Drehlager 54 mit Bezug auf das Fahrzeugdach 9. Wenn das in der zuvor erläuterten Weise von der Windabweiserkulisse 28 abgekuppelte Kupplungsstück 36 weiter nach hinten bewegt wird, trifft es mit einer Anschlagfläche 60 auf eine Anschlagfläche 61 des Drehlagers 54. Auf den Riegelstein 58 wird von dem Drehlager 54 eine nach hinten gerichtete Kraft ausgeübt, die den Riegelstein 58 gegen eine Schrägfläche 61 der stationären Riegelsteinaufnahme 59 anpreßt. Dies bewirkt, daß auf den Riegelstein 58 eine Querkraftkomponente übertragen wird, unter deren Einfluß der Riegelstein 58 die Riegelsteinaufnahme 59 verläßt und sich stattdessen in eine Riegelsteinaufnahme 62 des Kupplungsstücks 36 einlegt. Auf diese Weise wird das Drehlager 54 zum Verschieben entlang der Führungsschiene 22 freigegeben, und es wird über das Kupplungsstück 36 mit der Antriebseinheit 41 gekuppelt.Der Führungsbolzen 52 der Schiebelamelle 10e wirkt mit einer nach hinten schräg ansteigenden, oben offenen Nut 63 eines Drehlagers 64 zusammen, an dem das Drehlagersegment 51 der nächsten Schiebelamelle 10d abgestützt ist. Das Drehlager 64 unterscheidet sich bei der veranschaulichten Ausführungsform von dem vordersten Drehlager 54 im wesentlichen durch einen die Nut 63 bildenden Ansatz 65. Insbesondere weist es gleichfalls eine kreisbogenförmige Führungsnut 53 und eine Queröffnung 57 auf. Außerdem ist in einer Nut 66 des Drehlagers 64 ein Sperrschieber 67 um eine begrenzte Strecke längsverschiebbar gelagert. Eine Druckfeder 68 sitzt zwischen einem Anschlag 69 am hinteren Ende des Sperrschiebers 67 und einem Anschlag 70 des Drehlagers 64, und sie spannt den Sperrschieber 67 mit Bezug auf das Drehlager 64 nach hinten vor. Im vorderen Teil des Sperrschiebers 67 ist eine sich in lotrechter Richtung erstreckende, oben offene Nut 71 ausgebildet. In einem in Längsrichtung mittleren Bereich des Sperrschiebers 67 befindet sich eine Riegelsteinaufnahme 72 für einen in der Queröffnung 57 des Drehlagers 64 verstellbar geführten Riegelstein 73. Das Drehlager 64, der Sperrschieber 67, die Feder 68 und der Riegelstein 73 bilden eine insgesamt mit 74 bezeichnete Lagereinheit, die mit Ausnahme der Ausgestaltung des jeweiligen Riegelsteins 73 für jede der Schiebelamellen 10d bis 10a gleich aufgebaut ist.

Zur Unterscheidung der betreffenden Lagereinheit und ihrer Bestandteile z.B. in den Fign. 3 bis 5 sind die Lagereinheiten mit 74a bis 74d bezeichnet, und den Einzelteilen der Lagereinheiten sind entsprechende Buchstaben a bis d zugefügt.In der Schließstellung der Lamelle 10e liegt deren Führungsbolzen 52 in der Nut 63 des Drehlagers 64d, wie dies aus den Fign. 3a und 39 ersichtlich ist. Der Sperrschieber 67 verhindert mit der hinteren Flanke 75 der Nut 71 ein Herausgleiten des Führungsbolzens 52 aus der Nut 63. Die Queröffnung 57 und die Riegelsteinaufnahme 72 sind miteinander ausgerichtet (Fig. 39). Der in die Riegelsteinaufnahme 72 eingreifende Riegelstein 73d verhindert eine gegenseitige Verstellung von Sperrschieber 67 und Drehlager 64d.

Entsprechendes gilt für das Zusammenwirken zwischen den Drehlagersegmenten 51 der Schiebelamellen 10c bis 10a und den Führungsbolzen 52 der Schiebelamellen 10d bis 10b mit den Drehlagern 64c bis 64a.Der Führungsbolzen 52 der hintersten Schiebelamelle 10a greift in eine Ausstellbahn 77 einer Ausstellführung 78 ein, die an ihrem hinteren Ende um eine von einem Lagerbolzen 79 gebildete, dachfeste Schwenkachse schwenkbar gelagert ist.

Die Ausstellführung 78 trägt nahe ihrem vorderen Ende einen Nocken 80, der seinerseits mit einer Kulissenbahn 81 einer Anhebekulisse 82 in Eingriff steht. Die Kulissenbahn 81 weist im wesentlichen vordere und hintere Endabschnitte 83 bzw. 84 sowie einen diese Endabschnitte verbindenden Hauptabschnitt 85 auf, der schräg nach vorne ansteigend verläuft. Die Anhebekulisse 82 ist entlang der Führungsschiene 22 verstellbar geführt, und sie steht über eine Verbindungsstange 86 in ständiger Verbindung mit der Windabweiserkulisse 28. Die Verbindungsstange 86 ist in einer Führungsbahn 87 der Führungsschiene 22 längsverstellbar geführt. Bei geschlossenem Dach und in Außerbetriebsstellung befindlichem Windabweiser 16 nimmt die Anhebekulisse 82 ihre vordere Endstellung ein. Der Nocken 80 liegt im hinteren Endabschnitt 84 der Kulissenbahn 81 und ist dadurch gegen unbeabsichtigtes Anheben gesichert. Das vordere Ende der Ausstellführung 78 ist nach unten geschwenkt. Der Führungsbolzen 52 der hintersten Schiebelamelle 10a steht in einem vorderen Endabschnitt 88 des Kulissenschlitzes 77, wobei der Endabschnitt 88 in dieser Stellung der Ausstellführung 78 im wesentlichen waagrecht verläuft.

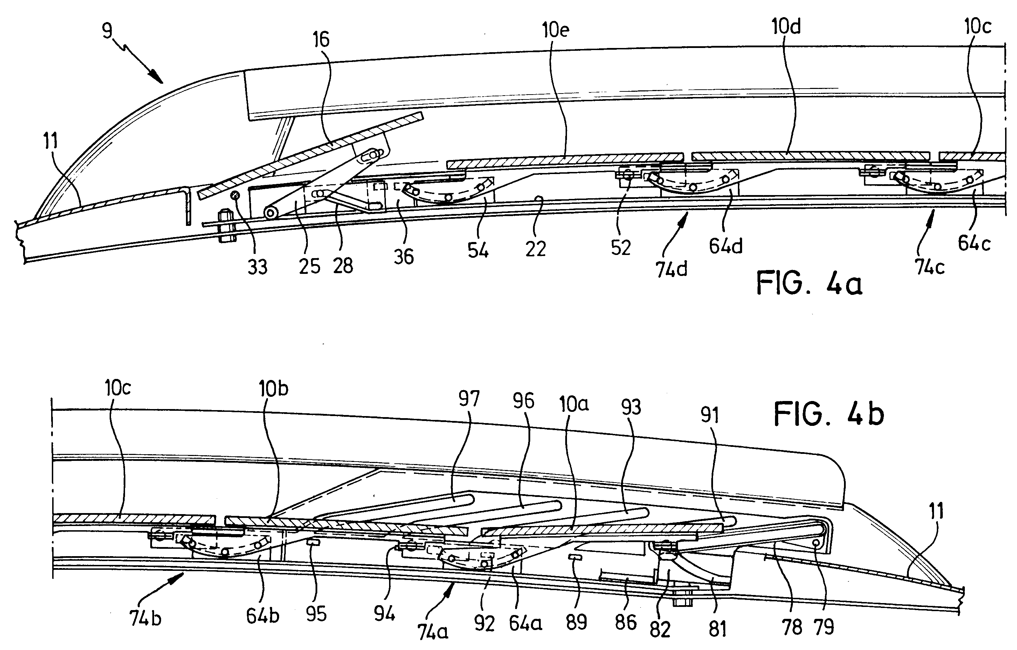

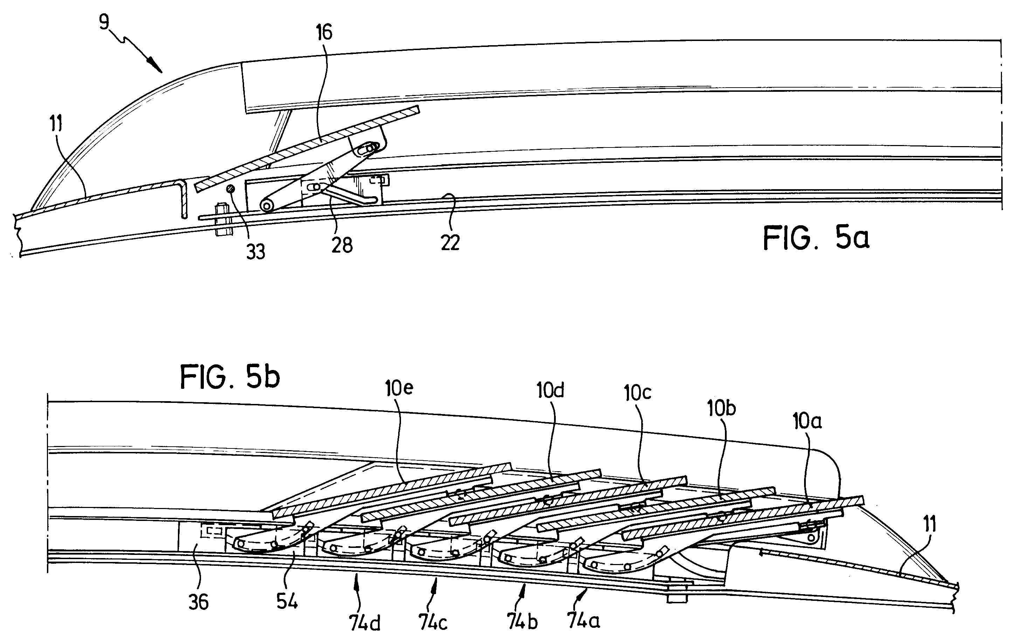

Während der Windabweiser 16 in der zuvor erläuterten Weise ausgestellt wird, bewegt sich die Anhebekulisse 82 unter dem Einfluß der Verbindungsstange 86 entlang der Führungsschiene 22 nach hinten. Dabei gelangt der Nocken 80 in den Hauptabschnitt 85 der Kulissenbahn 81, und er wird von der Kulissenbahn 81 aus der Stellung gemäß Fig. 3b in die in den Fign. 4b und 5b gezeigte Lage angehoben. Dadurch wird die Ausstellführung 78 unter Mitnahme des im vorderen Ende der Ausstellführung stehenden Führungsbolzens 52 um den Lagerbolzen 79 in den Fign. 3b bis 5b im Uhrzeigersinn verschwenkt. Infolgedessen wird die hinterste Lamelle 10a hinten so weit ausgestellt, daß die Hinterkante der Lamelle 10a von dem hinteren Rand der Dachöffnung 13 freikommt, wie dies in Fig. 4b zu erkennen ist.Wenn anschließend das Kupplungsstück 36 weiter nach hinten verfahren wird, nimmt dieses das vorderste Drehlager 54 und damit auch die vorderste Schiebelamelle 10e mit. Durch den Eingriff des Führungsbolzens 52 der Schiebelamelle 10e in das Drehlager 64d und die Sicherung dieses Eingriffs mittels des zugehörigen Sperrschiebers 67 wird die nach hinten gerichtete Verstellkraft auf die Lagereinheit 64d übertragen, die zusammen mit der Schiebelamelle 10d verschoben wird. Entsprechendes gilt für die folgenden Schiebelamellen, so daß alle Lamellen 10e bis 10a in Form eines flächigen Verbundes nach hinten verstellt werden. Dabei erfolgt der Kraftschluß über die gesamte Kette von Lamellen und Lagereinheiten bis zu dem Führungsbolzen 52 der hintersten Lamelle 10a, der den vorderen Endabschnitt 88 des Kulissenschlitzes 77 verläßt und in der schräg ansteigenden Ausstellbahn 77 der Ausstellführung 78 nach hinten läuft.

Aufgrund der Verlagerung des Führungsbolzens 52 nach oben wird die Lamelle 10a um die Schwenkachse 15a entgegen dem Uhrzeigersinn (in den Fign. 3b und 4b) verschwenkt, die von dem Drehlagersegment 51 und der Führungsnut 53 der Lagereinheit 74 bestimmt wird. Dieser Schwenkbewegung ist eine Verschiebebewegung der Lamelle nach hinten überlagert. Wenn die Lamelle 10a auf diese Weise vollständig ausgestellt und zurückgeschoben ist, hat die Lagereinheit 74a mit Bezug auf die Führungsschiene 22 eine Position erreicht, in welcher die Queröffnung 57 des Drehlagers 64a mit einer dachfesten Riegelsteinaufnahme 89 fluchtet, die insbesondere in der Führungsschiene 22 oder dem Dachrahmen 20 ausgebildet sein kann. Aufgrund der von dem Führungsbolzen 52 der Lamelle 10b auf die Flanke 75 des Sperrschiebers 67 der Lagereinheit 64a ausgeübten, nach hinten gerichteten Schubkraft wird über eine Schrägfläche 90 der Sperrschieber-Riegelsteinaufnahme 72 eine quergerichtete Kraftkomponente auf den Riegelstein 73a aufgebracht. Dadurch verläßt der Riegelstein 73a die Riegelsteinaufnahme 72 des Sperrschiebers 67, und er rastet statt dessen in die dachfeste Riegelsteinaufnahme 89 ein. Der Sperrschieber 67 ist jetzt für eine nach hinten gerichtete Bewegung mit Bezug auf das Drehlager 64a freigegeben, während das Drehlager 64a mit Bezug auf die Führungsschiene 22 und den Dachrahmen 20 verriegelt wird. Die Verriegelung des Führungsbolzens 52 der Lamelle 10b in der Nut 63 des Drehlagers 64a wird aufgehoben.

Im Zuge der fortgesetzten Verschiebung der Lamelle 10b tritt deren Führungsbolzen 52 aus der Drehlagernut 63 nach oben aus, und der Führungsbolzen 52 gelangt in eine dachfeste Ausstellbahn 91, die nach hinten schräg ansteigt. Die Lamelle 10b löst sich aus dem flächigen Lamellenverbund und wird bei weiterer Verlagerung des Kupplungsstücks 36 nach hinten in eine Lage im wesentlichen parallel zur zuvor ausgestellten Lamelle 10a ausgestellt, wobei wiederum eine Schwenkbewegung und eine Verschiebebewegung einander überlagert sind. Erreicht die Lamelle 10b ihre vollständig ausgestellte Position, dann ist die Queröffnung 57 des Drehlagers 64b mit einer dachfesten Riegelsteinaufnahme 92 ausgerichtet.

In der zuvor für die Lagereinheit 74a erläuterten Weise gibt der Riegelstein 73b der Lagereinheit 74b den zugehörigen Sperrschieber 67 frei, und durch Eintauchen des Riegelsteins 73b in eine dachfeste Riegelsteinaufnahme 92 wird die Lagereinheit 74b gegenüber dem Dachrahmen 20 und der Führungsschiene 22 fixiert. Der Führungsbolzen 52 der Lamelle 10c wird für einen Übertritt in eine dachfeste Ausstellbahn 93 freigegeben, die Lamelle 10c wird beim Zurückschieben ausgestellt. Entsprechendes wiederholt sich für die Lamellen 10d und 10e. Die betreffenden dachfesten Riegelsteinaufnahmen (entsprechend 89 und 92) sind mit 94 und 95 bezeichnet, die zugehörigen Ausstellbahnen (entsprechend 91 und 93) mit 96 und 97. Wenn der Führungsbolzen 52 der Schiebelamelle 10e das Ende der Ausstellbahn 97 erreicht hat, ist das Dach entsprechend Fig. 5b voll geöffnet. Die Lagereinheiten 74a bis 74d sind über die Riegelsteine 73a bis 73d mit Bezug auf den Dachrahmen 20 fixiert. Eine entsprechende Fixierung des vordersten Drehlagers 54 zum Dachrahmen 20 hin ist nicht erforderlich, weil dieses Drehlager über das Kupplungsstück 36 mit der Antriebseinheit 41 verbunden bleibt.Die Ausstellbahnen 91, 93, 96 und 97 können in Dachaufsatzteilen 98 ausgebildet sein, die sich zu beiden Seiten der Dachöffnung 13 erstrecken.

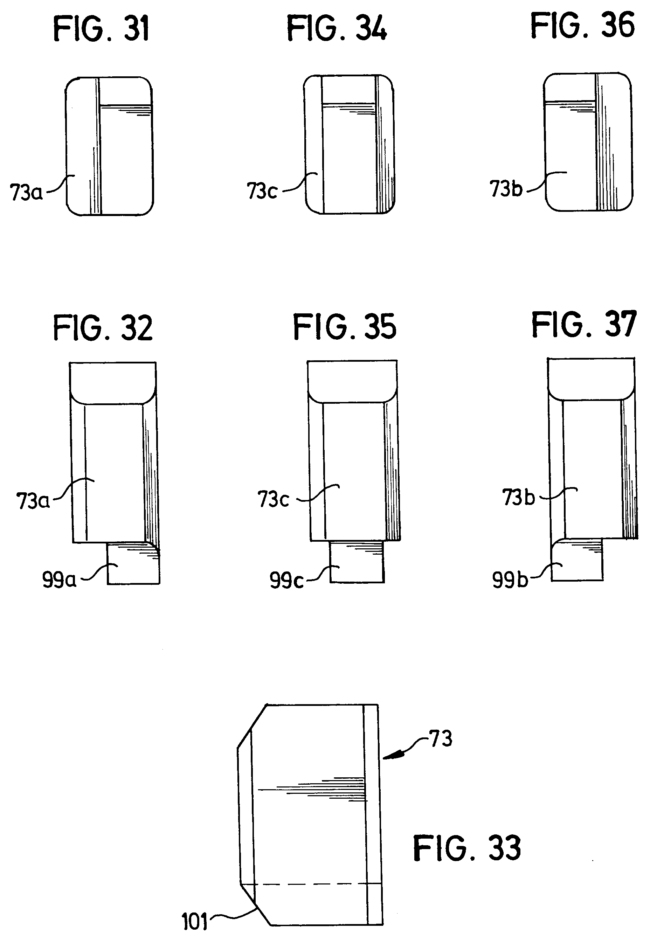

Die Dachaufsatzteile 98 können Teil einer Dachreling oder dergleichen sein.Bei dem geschilderten Schließvorgang des Daches läuft der zum Einrasten in die dachfeste Riegelsteinaufnahme 89 bestimmte Riegelstein 73a zuvor an den Riegelsieinaufnahmen 95, 94 und 92 vorbei. Entsprechend überläuft der Riegelstein 73b vor dem Einrasten in die Riegelsteinaufnahme 92 auch die Riegelsteinaufnahmen 95 und 94, während der Riegelstein 73c an der Riegelsteinaufnahme 95 vorbeiläuft, bevor er die Riegelsteinaufnahme 94 erreicht. Um ein ungewolltes Einrasten der Riegelsteine 73a, 73b und 73c in dachfeste Riegelsteinaufnahmen zu verhindern, an denen sich die Riegelsteine vorbeibewegen sollen, bevor sie die ihnen zugeordnete Riegelsteinaufnahme erreichen, sind die in die Riegelsteinaufnahmen eintauchenden Nasen 99a, 99b bzw. 99c der Riegelsteine 73a, 73b bzw. 73c mit Bezug auf den restlichen Teil dieser Riegelsteine unterschiedlich versetzt, wie dies insbesondere aus den Fign. 31 bis 37 hervorgeht. Entsprechend liegen die Riegelsteinaufnahmen 89, 92 und 94 in unterschiedlicher Höhe mit Bezug auf die Führungsschiene 22. Infolgedessen kann jeder der Riegelsteine nur mit der für ihn bestimmten dachfesten Riegelsteinaufnahme in Eingriff kommen.

Die Schließbewegung des Daches läuft in bezüglich der Öffnungsbewegung umgekehrter Reihenfolge ab. Ausgehend vom voll geöffneten Zustand (Fig. 5b) nimmt das mit der Antriebseinheit 41 ständig verbundene Kupplungsstück 36 über den Riegelstein 58 zunächst das vordere Drehlager 54 nach vorne mit. Der Führungsbolzen 52 der Schiebelamelle 10e läuft in der dachfesten Ausstellbahn 97 nach vorne und unten. Die Lamelle 10e wird um die von dem Drehlagersegment 51 und der Führungsnut 53 des Drehlagers 54 bestimmte Schwenkachse 15e im Uhrzeigersinn (in Fig. 5b) verschwenkt, während sie gleichzeitig eine Verschiebebewegung nach vorne ausführt. Der Führungsbolzen 52 legt sich dabei hinter einer nach oben vorstehende Nase 100 am vorderen Ende des Sperrschiebers 67 der Lagereinheit 64d, die zu diesem Zeitpunkt über den Riegelstein 73d noch mit der Führungsschiene 22 gekuppelt ist. Durch fortgesetztes Weiterbewegen des Kupplungsstückes 36 zieht der Führungsbolzen 52 den Sperrschieber 67 an der Nase 100 nach vorne. Die Feder 68 wird zusammengepreßt, und die nach vorne gerichtete Verschiebekraft wird auf das Drehlager 64d sowie von diesem auf den in der Queröffnung 57 verschiebbar gelagerten Riegelstein 73d übertragen. Der Riegelstein 73d wird infolgedessen gegen eine zu seiner Schrägfläche 101 (Fig. 33) komplementäre Schrägfläche der dachfesten Riegelsteinaufnahme 95 angepreßt. Auf den Riegelstein 73d wird dadurch eine Querkraftkomponente ausgeübt, die den Riegelstein 73d aus der Riegelsteinaufnahme 95 herausdrückt und in die jetzt mit der Queröffnung 57 fluchtende Riegelsteinaufnahme 72 des Sperrschiebers 67 einrasten läßt. Das Drehlager 64d und der zugehörige Sperrschieber 67 sind daher jetzt in der Stellung gemäß den Fign. 38 und 39 miteinander gekuppelt, in welcher der Führungsbolzen 52 der Schiebelamelle 10e in der Drehlagernut 63 verriegelt und dementsprechend die Lamelle 10e in die Dachebene zurückgeschwenkt ist. Entsprechende Bewegungsabläufe wiederholen sich nacheinander für die übrigen Schiebelamellen 10d bis 10a und Lagereinheiten 74c bis 74a, bis schließlich der von den Lamellen 10e bis 10b gebildete Lamellenverbund seine Schließstellung einnimmt und der Führungsbolzen 52 der Schiebelamelle 10a das vordere Ende des Endabschnitts 88 des Kulissenschlitzes 77 der schwenkbaren Ausstellführung 78 erreicht hat.

Nachdem das Drehlager 54 seine, beispielsweise durch einen Anschlag der Führungsschiene 22 bestimmte, vordere Endstellung erreicht hat, wird durch fortgesetztes Verstellen des Kupplungsstückes 36 nach vorne von einer Schrägfläche 102 der in dem Kupplungsstück 36 ausgebildeten Riegelsteinaufnahme 62 eine Querkraft auf den Riegelstein 58 ausgeübt, die bewirkt, daß der Riegelstein 58 die Riegelsteinaufnahme 62 verläßt und sich in die dachfeste Riegelsteinaufnahme 59 einlegt. Damit ist die Kupplung zwischen dem Lamellenverbund und der Antriebseinheit 41 aufgehoben; der Lamellenverbund ist mit Bezug auf die Führungsschiene 22 fixiert. Das nach vorne weiterlaufende Kupplungsstück 36 legt sich mit einer Anschlagfläche 103 gegen eine Anschlagfläche 104 der Windabweiserkulisse 28 an. Dadurch wird der in der Öffnung 45 der Windabweiserkulisse 28 gelagerte Riegelstein 44 gegen eine Schrägfläche 105 der dachfesten Riegelsteinaufnahme 48 gepreßt. Der Riegelstein 44 verläßt die Riegelsteinaufnahme 48 und legt sich statt dessen in die Riegelsteinaufnahme 46 des Kupplungsstücks 36 ein. Im Zuge der jetzt stattfindenden Vorbewegung der Windabweiserkulisse 28 drückt die Kulissenbahn 27 den Kulissenstift 26 nach unten. Der Ausstellhebel 25 wird in Fig. 15 im Uhrzeigersinn verschwenkt. Der Windabweiser 16 wird in seine Ruhestellung abgesenkt. Gleichzeitig wird über die Verbindungsstange 86 die Anhebekulisse 82 nach vorne bewegt. Der Nocken 80 der Ausstellführung 78 wird von der Kulissenbahn 81 der Anhebekulisse 82 nach unten gedrückt. Die Ausstellführung 78 zieht entsprechend den Führungsbolzen 52 der Lamelle 10a nach unten. Die Lamelle 10a wird in ihre abgesenkte Schließstellung gebracht. Nunmehr ist das Fahrzeugdach 9 vollständig geschlossen.

## Patentansprüche

1. Fahrzeugdach mit einer Folge von Lamellen zum wahlweisen Verschließen oder mindestens teilweisen Freigeben einer Dachöffnung in einer festen Dachfläche, wobei die Lamellen in der Schließstellung aneinander angrenzen und einen flächigen Lamellenverbund bilden, wobei jede Lamelle an ihren Schmalseiten an zwei in Verschieberichtung in Abstand voneinander liegenden Führungsstellen entlang von dachfesten Führungen, mit denen beide Führungsstellen im gesamten Verstellbereich der Lamellen in Eingriff gehalten sind, derart geführt ist, daß beim Verstellen der Lamellen der flächige Lamellenverbund durch Verschwenken jeweils einer einzelnen Lamelle am einen Verbundende Lamelle für Lamelle beim Öffnen des Daches aufgelöst bzw. beim Schließen des Daches wiederhergestellt wird, dadurch gekennzeichnet, daß entlang einer gemeinsamen Führungsbahn verschiebbare Lagereinheiten (74) vorgesehen sind, in denen zum Verstellen des flächigen Lamellenverbundes jeweils sowohl die hintere Führungsstelle (Führungsbolzen 52) einer der Lamellen (10e bis 10b) als auch die vordere Führungsstelle (Drehlagersegment 51) der im Lamellenverbund nächstfolgenden Lamelle (10d bis 10a) gelagert sind und die dadurch über die Lamellen selbst oder über die Lamellen abstützende Lamellenträger (50) untereinander formschlüssig gekuppelt sind, und daß diese Lagereinheiten (74) mit einer in Abhängigkeit von der Verstellbewegung des flächigen Lamellenverbundes gesteuerten Sperreinrichtung (Sperrschieber 67, Drehlager 64) versehen sind, welche die hintere Führungsstelle der betreffenden Lamelle beim Öffnen des Daches für eine Ausstellbewegung freigibt bzw. beim Schließen des Daches wieder mit der zugehörigen Lagereinheit verriegelt, wenn die Lagereinheit im Zuge ihrer Verschiebebewegung eine vorbestimmte Lage mit Bezug auf die dachfeste Führungsbahn (Führungsschiene 22) erreicht.

2. Fahrzeugdach nach Anspruch 1, dadurch gekennzeichnet, daß die Lagereinheiten (74) jeweils mit einem Drehlager (64), in dem eine Lamelle (10d bis 10a) mit ihrer vorderen Führungsstelle (Drehlagersegment 51) schwenkbar gelagert ist und das eine Aufnahme (Nut 63) zum lösbaren Aufnehmen der hinteren Führungsstelle (Führungsbolzen 52) der im Lamellenverbund vorausgehenden Lamelle (10e bis 10b) aufweist, sowie mit einem Sperrglied (Sperrschieber 67) versehen ist, das gegenüber dem Drehlager verstellbar ist, um die betreffende hintere Führungsstelle in der Aufnahme zu verriegeln bzw. für eine Ausstellbewegung der Lamelle freizugeben.

3. Fahrzeugdach nach Anspruch 2, dadurch gekennzeichnet, daß die Lagereinheiten (74) mit einer Verriegelungsvorrichtung (Riegelstein 73) versehen sind, welche das Drehlager (64) und das Sperrglied (Sperrschieber 67) sowohl bei geschlossenem Dach als auch beim Verschieben des flächigen Lamellenverbundes in einer gegenseitigen Sperrstellung verriegelt, in welcher die hintere Führungsstelle (Führungsbolzen 52) festgehalten wird.

4. Fahrzeugdach nach Anspruch 2, dadurch gekennzeichnet, daß die Lagereinheiten (74) jeweils mit einer Verriegelungsvorrichtung (Riegelstein 73) versehen sind, welche das Drehlager (64) mit Bezug auf ein dachfestes Teil (Dachrahmen 20, Führungsschiene 22) verriegelt, wenn die Lagereinheit eine Stellung erreicht, in welcher die Lamelle (10), deren vordere Führungsstelle (Drehlagersegment 51) in der Lagereinheit gelagert ist, vollständig ausgestellt ist.

5. Fahrzeugdach nach Ansprüchen 3 und 4, dadurch gekennzeichnet, daß die beiden Verriegelungseinrichtungen von einer Umschaltkupplung (Riegelstein 73) gebildet sind, welche in Abhängigkeit von der Stellung der betreffenden Lagereinheit (74) mit Bezug auf die dachfeste Führung das Drehlager (64) entweder mit Bezug auf das Sperrglied (Sperrschieber 67) oder auf das dachfeste Teil fixiert.

6. Fahrzeugdach nach Anspruch 5, dadurch gekennzeichnet, daß die Umschaltkupplung als Riegelsteinkupplung ausgebildet ist.

7. Fahrzeugdach nach einem der vorhergehenden Ansprüche, dadurch gekennzeichnet, daß den Lamellen (10a bis 10e) zum Führen der für die Ausstellbewegung freigegebenen hinteren Führungsstelle (Führungsbolzen 52) jeweils eine Ausstellbahn (77, 91, 93, 96, 97) zugeordnet ist.

8. Fahrzeugdach nach Anspruch 7, dadurch gekennzeichnet, daß die Ausstellbahn (77) für die hinterste Lamelle (10a) Teil einer schwenkbaren Ausstellführung (78) ist, mittels deren die Hinterkante der hintersten Lamelle beim Öffnen des Daches vor dem Verschieben des flächigen Lamellenverbundes über den hinteren Rand der Dachöffnung (13) anhebbar ist.

9. Fahrzeugdach nach Ansprüchen 7 und 8, dadurch gekennzeichnet, daß die Ausstellbahnen (91, 93, 96, 97) der übrigen Lamellen (10b bis 10e) dachfest ausgebildet sind.

10. Fahrzeugdach nach einem der vorhergehenden Ansprüche, dadurch gekennzeichnet, daß die vordere Führungsstelle (Drehlagersegment 51) der vordersten Lamelle (10e) in einem entlang der dachfesten Führungsbahn (Führungsschiene 22) verstellbaren Drehlager (54) gelagert ist, das mit einer Antriebseinheit (41) in ständiger oder lösbarer Verbindung steht.

11. Fahrzeugdach nach Anspruch 10, dadurch gekennzeichnet, daß das der vordersten Lamelle (10e) zugeordnete Drehlager (54) mit einem entlang der dachfesten Führungsbahn (Führungsschiene 22) verstellbaren Kupplungsstück (36) kuppelbar ist, das seinerseits mit der Antriebseinheit (41) in ständiger Verbindung steht.

12. Fahrzeugdach nach Anspruch 11, dadurch gekennzeichnet, daß das Kupplungsstück (36) in Abhängigkeit von seiner Lage mit Bezug auf die dachfeste Führungsbahn (Führungsschiene 22) selbsttätig mit dem Drehlager (54) der vordersten Lamelle (10e) oder einer Stelleinrichtung (Windabweiserkulisse 28, Ausstellhebel 25) für einen Windabweiser (16) kuppelbar ist.

13. Fahrzeugdach nach Anspruch 12, gekennzeichnet durch eine Umschaltkupplung (Riegelstein 58), die in einer ersten Stellung das Drehlager (54) der vordersten Lamelle (10e) mit dem Kupplungsstück (36) und in einer zweiten Stellung das Drehlager (54) mit einem dachfesten Teil kuppelt, sowie eine weitere Umschaltkupplung (Riegelstein 44), die in einer ersten Stellung die Windabweiser-Stelleinrichtung (Windabweiserkulisse 28, Ausstellhebel 25) mit dem Kupplungsstück (36) und in einer zweiten Stellung die Windabweiser-Stelleinrichtung mit einem dachfesten Teil kuppelt.

14. Fahrzeugdach nach Anspruch 13, dadurch gekennzeichnet, daß die beiden Umschaltkupplungen als Riegelsteinkupplungen ausgebildet sind.

15. Fahrzeugdach nach einem der Ansprüche 8 bis 14, gekennzeichnet durch eine an die Antriebseinheit (41) ankuppelbare Verstelleinrichtung (Anhebekulisse 82) zum Verstellen der schwenkbaren Ausstellführung (78).

16. Fahrzeugdach nach Ansprüchen 13 und 15, dadurch gekennzeichnet, daß die Windabweiser-Stelleinrichtung (Windabweiserkulisse 28, Ausstellhebel 25) und die Verstelleinrichtung (Anhebekulisse 82) der schwenkbaren Ausstellführung (78) in ständiger gegenseitiger Verbindung (Verbindungsstange 86) stehen.

## Claims

1. A vehicle roof with a series of plates for the optional closure or at least partial opening of a roof aperture in a fixed roof area, the plates bordering one another when in the closed position and forming a continuous panel of plates, each plate being on its narrow sides so guided at two guide locations which are spaced apart in the direction of displacement and along guides rigid with the roof, with which both guide locations are held in engagement over the entire range of displacement of the plates, so that by pivoting of in each case one single plate at one end of the panel, plate by plate, the continuous panel of plates is broken up as the roof is opened or restored as the roof is closed, characterised in that bearing units (74) are provided which are displaceable along a common guide track and in which for displacement of the flat plate system in each case both the rear guide point (guide pin 52) of one of the plates (10e to 10b) and also the front guide part (pivot bearing segment 51) of the next plate (10d to 10a) in succession are mounted and which are form-lockingly coupled to one another via the plates themselves or via the plate carriers (50) which support the plates and in that these bearing units (74) are provided with a blocking device controlled as a function of the displacement movement of the panel of plates (blocking slide bar 67, pivot bearing 64), the said blocking device releasing the rear guide point of the respective plate upon opening of the roof for an opening movement or upon closure of the roof locking it again with the associated bearing unit when, during the course of its displacement movement, the bearing unit reaches a predetermined position in respect of the guide (guide rail 22) which is rigid with the roof.

2. A vehicle roof according to Claim 1, characterised in that the bearing units (74) are in each case provided with a pivot bearing (64) in which the front bearing point (pivot bearing segment 51) of a plate (10d to 10a) is pivotally mounted and which comprises a seating (groove 63) for the separable holding of the rear guide point (guide pin 52) of the plate (10e to 10b) which precedes it in the plate system and with a blocking member (blocking slide bar 67) which is adjustable in respect of the pivot bearing in order to lock the respective rear guide point in the housing or in order to release it so that the plate can be opened.

3. A vehicle roof according to Claim 2, characterised in that the bearing units 74 are provided with a locking device (locking block 73) which locks the pivot bearing (64) and the blocking member (blocking slide bar 67) both when the roof is closed and also during displacement of the flat plate system in a mutually blocked position in which the rear guide point (guide pin 52) is held fast.

4. A vehicle roof according to Claim 2, characterised in that the bearing units (74) are each provided with a locking device (locking block 73) which locks the pivot bearing (64) in respect of a part rigid with the roof (roof frame 20, guide rail 22) when the bearing unit has reached a position in which the plate (10) the forward guide point (pivot bearing segment 51) of which is mounted in the bearing unit is completely pushed out.

5. A vehicle roof according to Claims 3 and 4, characterised in that the two locking units are formed by a switchover coupling (locking block 73) which, as a function of the position of the respective bearing unit (74) in relation to the guide rigid with the roof fixes the pivot bearing (64) either in respect of the blocking member (blocking slide bar 67) or the part rigid with the roof.

6. A vehicle roof according to Claim 5, characterised in that the switchover coupling is constructed as a locking block coupling.

7. A vehicle roof according to one of the preceding Claims, characterised in that for guiding the rear guide point (guide pin 52) released for the pivot movement, a pivot track (77, 91, 93, 96, 97) is associated with each of the plates (10a to 10e).

8. A vehicle roof according to Claim 7, characterised in that the pivot track (77) for the rearmost plate (10a) is part of a pivotable pivot guide device (78) by means of which the rear edge of the rearmost plate can, upon opening of the roof, be lifted prior to displacement of the flat plate system over the rear edge of the roof opening (13).

9. A vehicle roof according to Claims 7 and 8, characterised in that the pivot tracks (91, 93, 96, 97) of the other plates (10b to 10e) are constructed rigid with the roof.

10. A vehicle roof according to one of the preceding Claims, characterised in that the forward guide point (pivot bearing segment 51) of the foremost plate (10e) is mounted in a pivot bearing (54) adapted for displacement along the guide track (guide rail 22) rigid with the roof and which is in constant or separable connection with a drive unit 41.

11. A vehicle roof according to Claim 10, characterised in that the pivot bearing (54) associated with the foremost plate (10e) can be coupled to a coupling element (36) adapted for displacement along the guide track (guide rail 22) rigid with the roof, said coupling element (36) being in turn constantly connected to the drive unit (41).

12. A vehicle roof according to Claim 11, characterised in that the coupling element (36) can, as a function of its position in respect of the guide track (guide rail 22) rigid with the roof, automatically be coupled to the pivot bearing (54) of the foremost plate (10e) or a positioning device (wind deflector sliding block 28, pivot lever 25) for a wind deflector (16).

13. A vehicle roof according to Claim 12, characterised by a switchover coupling (locking block 58) which in a first position couples the pivot bearing (54) of the foremost plate (10e) to the coupling element (36) and in a second position couples the pivot bearing (54) to a part rigid with the roof, and a further switchover coupling (locking block 44) which in a first position couples the wind deflector positioning means (wind deflector sliding block 28, pivot lever 25) to the coupling element (36) and in a second position couples the wind deflector positioning device to a part rigid with the roof.

14. A vehicle roof according to Claim 13, characterised in that the two switchover couplings are constructed as locking block couplings.

15. A vehicle roof according to one of Claims 8 to 14, characterised by a displacement device (lifting sliding block 82) adapted to be coupled to the drive unit (41) in order to displace the pivotable pivot guide device (78).

16. A vehicle roof according to Claims 13 and 15, characterised in that the wind deflector positioning device (wind deflector sliding block 28, pivot lever 25) and the displacing means (lifting sliding block 82) of the pivotable pivot guide device (78) are in a constant reciprocal connection (connecting rod 86).

## Revendications

1. Toit de véhicule comportant une série de lames permettant à volonté de fermer ou d'ouvrir au moins partiellement une ouverture pratiquée dans un toit rigide, dans lequel :
- les lames, en position de fermeture, sont contiguës entre elles et forment un panneau plat,
- chaque lamelle, sur ses deux côtés étroits, présente deux points de guidage espacés selon la direction de coulissement et qui sont en prise, dans toute la plage de déplacement des lames, avec des guides fixes du toit,
- lorsqu'on déplace les lames, le panneau plat qu'elles forment se défait en créant l'ouverture de toit, par basculement des lames, l'une après l'autre, à une extrémité du panneau, et se rétablit de même lorsqu'on ferme le toit,
caractérisé en ce qu'
- il est prévu, le long d'une piste de guidage commune, des paliers unitaires coulissants (74) dans chacun desquels, pour déplacer le panneau plat de lames, sont montés à la fois le point de guidage arrière (broche de guidage 52) d'une des lames (10e à 10b) ainsi que le point de guidage avant (segment de palier de rotation 51) de la lame (10d à 10a) qui la suit dans le panneau, les paliers se trouvant ainsi accouplés entre eux avec combinaison de formes, par l'intermédiaire des lames elles-mêmes ou des supports (50) de ces lames,
- chaque palier unitaire (74) est équipé d'un dispositif d'arrêt (coulisseau d'arrêt 67, palier de rotation 64) piloté en fonction du sens de déplacement du panneau plat de lames et qui libère le point de guidage arrière de la lame concernée pour qu'il se déplace en montant lors de l'ouverture du toit ou, lors de la fermeture, se verrouille à nouveau dans le palier unitaire correspondant, lorsque le palier unitaire, au cours de son coulissement, atteint une position prédéterminée par rapport à la piste de guidage montée sur le toit fixe (rail de guidage 22).

2. Toit de véhicule selon la revendication 1,
caractérisé en ce que
les paliers unitaires (74) sont équipés chacun d'un palier de rotation (64) dans lequel peut pivoter, par son point de guidage avant (segment de palier de rotation 51), une lame (10d à 10a) et qui présente un logement (rainure 63) pour recevoir de manière amovible le point de guidage arrière (broche de guidage 52) de la lame (10e à 10b) située en avant dans le panneau, ainsi que d'un organe d'arrêt (coulisseau d'arrêt 67) qui peut se déplacer par rapport au palier de rotation, afin de verrouiller le point de guidage arrière correspondant dans le logement, ou le libérer pour permettre à la lame de se relever.

3. Toit de véhicule selon la revendication 2,
caractérisé en ce que
les paliers unitaires (74) sont équipés chacun d'un dispositif de verrouillage (verrou 73) qui immobilise l'un par rapport à l'autre le palier de rotation (65) et l'organe d'arrêt (coulisseau 67), lorsque le toit est fermé ou pendant le coulissement du panneau de lames, dans une position d'arrêt où le point de guidage arrière (broche de guidage 52) se trouve maintenu fixe.

4. Toit de véhicule selon la revendication 2,
caractérisé en ce que
les paliers unitaires (74) sont équipés chacun d'un dispositif de verrouillage (verrou 73) qui immobilise le palier de rotation (64) par rapport à une partie fixe du toit (cadre de toit 20), rail de guidage (22) lorsque le palier unitaire atteint une position dans laquelle la lame (10), dont le point de guidage avant (segment de palier de rotation 51) est logé dans le palier unitaire, est entièrement relevée.

5. Toit de véhicule selon les revendications 3 ou 4,
caractérisé en ce que
les deux dispositifs de verrouillage sont constitués par un accouplement commutable (verrou 73) qui, en fonction de la position du palier unitaire (74) concerné par rapport au guidage fixé au toit, assure un blocage par rapport à l'organe d'arrêt (coulisseau 67) ou par rapport à la partie fixe du toit.

6. Toit de véhicule selon la revendication 5,
caractérisé en ce que
l'accouplement commutable est constitué par un accouplement à verrou.

7. Toit de véhicule selon l'une des revendications précédentes,
caractérisé en ce qu'
à chaque lame (10a à 10e) est associée une piste de relevage (77, 91, 93, 96, 97) afin de guider le point de guidage arrière (broche de guidage 52) lorsqu'il est libéré pour permettre le relevage de la lame.

8. Toit de véhicule selon la revendication 7,
caractérisé en ce que
la piste de relevage (77) de la lame (10a) la plus en arrière est une partie d'un guidage de relevage basculant (78) permettant de soulever le bord arrière de la lame (10a) au-dessus du bord arrière de l'ouverture de toit (13) lorsqu'on ouvre celui-ci, avant coulissement du panneau plat de lames.

9. Toit de véhicule selon la revendication 7 ou 8,
caractérisé en ce que
les pistes de relevage (91, 93, 96, 97) des autres lamelles (10b à 10a) sont fixées au toit.

10. Toit de véhicule selon l'une des revendications précédentes,
caractérisé en ce que
le point de guidage avant (segment de palier de rotation 51) de la lame (10e) la plus en avant est monté dans un palier de rotation (54) qui peut se déplacer le long d'une piste de guidage fixée au toit (rail de guidage 22) et qui est en liaison permanente ou séparable avec l'unité d'entraînement (41).

11. Toit de véhicule selon la revendication 10,
caractérisé en ce que
le palier de rotation (54) associé à la lame (10e) située la plus en avant, peut être accouplé à une pièce d'accouplement (36) qui peut se déplacer le long d'une piste de guidage fixée au toit (rail de guidage 22), la pièce (36) étant de son côté en liaison permanente avec l'unité d'entraînement (41).

12. Toit de véhicule selon la revendication 11,
caractérisé en ce que
la pièce d'accouplement (36), en fonction de sa position par rapport à la piste de guidage fixée au toit (rail de guidage 22) peut s'accoupler automatiquement au palier de rotation (54) de la lame (10e) située la plus en avant ou à un dispositif de réglage (coulisse 28 ou levier de levage 25) d'un déflecteur d'air (16).

13. Toit de véhicule selon la revendication 12,
caractérisé en ce qu'
il comporte d'une part un accouplement commutable (verrou 58) qui accouple le palier de rotation (54) de la lame (10e) située la plus en avant avec la pièce d'accouplement elle-même dans une première position, avec une pièce fixée au toit dans une seconde position, et d'autre part un second accouplement commutable (verrou 44) qui accouple le dispositif de levage du déflecteur d'air (coulisse de déflecteur 28, levier de levage 25) à la pièce d'accouplement (36) dans une première position, et à une partie fixe du toit dans une seconde position.

14. Toit de véhicule selon la revendication 13,
caractérisé en ce que
les deux accouplements commutables sont des accouplements à verrou.

15. Toit de véhicule selon l'une des revendications 8 à 14,
caractérisé en ce qu'
il comporte un dispositif de réglage (coulisse de relevage 82) qui peut être accouplé à l'unité d'entraînement (41) pour déplacer le guidage de relevage basculant(78).

16. Toit de véhicule selon les revendications 13 et 15,
caractérisé en ce que
le dispositif de relevage du déflecteur d'air (coulisse de déflecteur 28, levier de relevage 25) et le dispositif de réglage (coulisse de soulèvement 82) du guidage de relevage basculant (78) sont reliés en permanence (barre de liaison 86).
